# EUROPEAN PATENT SPECIFICATION

(11) **EP 1 880 880 B1**
(45) Date of publication and mention of the grant of the patent: **17.10.2012**
(21) Application number: 07252748.4
(22) Date of filing: 09.07.2007
(51) Int. Cl.: B60G 17/044

(54) **Vehicle**
Fahrzeug
Véhicule

(30) Priority: 20.07.2006 JP 2006197521
(43) Date of publication of application: 23.01.2008
(73) Proprietor: Yamaha Hatsudoki Kabushiki Kaisha, Shizuoka-ken Shizuoka 438-8501 (JP)
(72) Inventor: Kamioka, Takamasa, c/o Yamaha Hatsudoki K.K., Iwata-shi, Shizuoka-ken 438-8501 (JP)
(74) Representative: Moreland, David

(56) References cited:
- EP-A- 1 249 357
- EP-A- 1 422 438
- DE-A1- 4 401 770
- DE-A1- 19 505 026
- DE-B- 1 046 511
- US-A- 1 085 818
- US-A- 1 151 595
- US-A- 3 000 625

## Description

### FIELD OF THE INVENTION

The present invention relates to a vehicle and more particularly to a vehicle provided with a suspension system.

### BACKGROUND TO THE INVENTION

Suspension systems for use in motorcycles (vehicles) are known, for example, from JP-T-2001-501155. JP-T-2001-50115 discloses a suspension system that includes a tubular member that has a gas chamber filled with air inside, and a piston that is disposed inside the tubular member. This suspension system is structured such that, when the suspension system extends and compresses, the air in the gas chamber is compressed or expands to generate reaction force.

However, in the suspension system disclosed in JP-T-2001-501155, in order to increase the reaction force of the suspension system, normally, the gas chamber is filled with high pressure air. It is therefore difficult to completely prevent air in the gas chamber from leaking to the outside of the suspension system. As a result, air gradually leaks from the suspension system reducing the air pressure in the gas chamber.

EP1422438 describes a gas-filled spring intended for a motor cycle. The gas-filled spring comprises a cylinder and a piston, said cylinder comprising a compression chamber and a return chamber. Arranged between the chambers is a passage, which is open only in a predetermined position of the cylinder and the piston relative to one another. In the open position, gas transfer between the chambers and/or pressure equalization or differential pressure adjustment of the gas pressures in the chambers are permitted

DE4401770 describes a suspension strut wherein the top of the suspension strut is supported on a vehicle chassis via a gas spring whose flexible bellows roll over a tubular sleeve about the strut. A second gas spring provides a pumping action to pump gas from atmosphere into the gas spring. Height control is provided via a vent hole which is normally covered by the tubular sleeve and which is exposed when the suspension is too high. The upper part of the gas chamber has a rigid wall which supports the membranes forming the chambers. The pumping chamber has a valve which connects to atmosphere while a second valve connects the two chambers. Excess gas is released via the venting hole to maintain the suspension height.

DE1046511 describes a suspension for a vehicle that comprises a roll up bellows that are arranged such that when the bellows expand or contract, the walls of the bellows roll up or unroll. A non-return valve is provided in the bellows. The non return valve is provided with a throttling passage adapted to permit the escape of air.

The invention has been devised in light of the above-described problems and an object of the invention is to provide a vehicle provided with a suspension system that can inhibit the air pressure in a gas chamber from reducing below a predetermined value.

### SUMMARY OF THE INVENTION

Various aspects of the present invention are defined in the independent claims. Some preferred features are defined in the dependent claims.

Described herein is a vehicle comprising:
a vehicle body;
a vehicle wheel; and
a suspension system disposed between the vehicle body and the vehicle wheel, wherein the suspension system comprises an air filled gas chamber and first air pressure adjustment means that is structured such that the air is sucked into the gas chamber from outside of the suspension system when the air pressure in the gas chamber falls below than a predetermined value.

The first air pressure adjustment means may be structured such that the air is sucked into the gas chamber from outside of the suspension system by extension and compression of the suspension system.

The first air pressure adjustment means may include a first check valve.

The suspension system may include an outer tube member, a shaft member that is moveably inserted inside the outer tube member, and a first piston that is attached to the shaft member.

The gas chamber may include a first gas chamber filled with air that is compressed when the suspension system extends, and that expands when the suspension system is compressed.

The first gas chamber may be provided in a region that is, at the least, surrounded by an inner surface of the outer tube member, an outer surface of the shaft member, and the first piston.

The gas chamber may include a second gas chamber filled with air that expands when the suspension system extends, and that is compressed when the suspension system is compressed.

The second gas chamber may be provided in a region that is, at the least, surrounded by the inner surface of the outer tube member, and the first piston.

The shaft member may comprise an oil chamber filled with oil.

The suspension system may further comprise a second piston disposed within the oil chamber. When the suspension system extends and compresses, the second piston may move inside the oil chamber of the shaft member and generate a damping force on the suspension system.

The first gas chamber may be connected to outside of the suspension system via the first air pressure adjustment means. Air may be sucked into the first gas chamber from outside of the suspension system in the case that the air pressure in the first gas chamber becomes less than a predetermined value as a result of the air in the first gas chamber expanding when the suspension system is compressed.

The suspension system may further comprise second air pressure adjustment means that supplies the air to the second gas chamber from the first gas chamber. When the air pressure in the second gas chamber becomes less than the air pressure in the first gas chamber as a result of expansion of the air in the second gas chamber when the suspension system extends, air may be supplied from the first gas chamber to the second gas chamber via the second air pressure adjustment means.

The second air pressure adjustment means may comprise a second check valve.

The suspension system may further comprise third air pressure adjustment means that discharges air from the first gas chamber to outside of the suspension system. When the air pressure in the first gas chamber becomes larger than a predetermined value as a result of the air in the first gas chamber being compressed when the suspension system extends, air may be discharged from the first gas chamber to outside of the suspension system via the third air pressure adjustment means.

The third air pressure adjustment means of the suspension system may comprise a third check valve.

The third air pressure adjustment means may comprise an adjustment member that adjusts the predetermined value of the air pressure at which the air in the first gas chamber is discharged from the first gas chamber to outside of the suspension system via the third air pressure adjustment means.

The suspension system may comprise a rear suspension.

Also described herein is a suspension system adapted to be disposed between a vehicle body and a vehicle wheel, wherein the suspension system comprises an air filled gas chamber and first air pressure adjustment means that is structured such that the air is sucked into the gas chamber from outside of the suspension system when the air pressure in the gas chamber falls below than a predetermined value.

Described herein is a vehicle comprising a vehicle body; a vehicle wheel; and a suspension system that is provided between the vehicle body and the vehicle wheel, and that absorbs shock that occurs when the vehicle body and the vehicle wheel move relative to each other. In addition, the suspension system includes a gas chamber that is filled with air, and first air pressure adjustment means that is structured such that air is sucked into the gas chamber from outside of the suspension system when the air pressure in the gas chamber is smaller than a predetermined value.

The suspension system is provided with the gas chamber filled with air and the first air pressure adjustment means that is structured such that air is sucked into the gas chamber from outside of the suspension system when the air pressure in the gas chamber is smaller than the predetermined value. As a result, in the case that air pressure in the gas chamber becomes smaller than the predetermined value due to the air from the gas chamber gradually leaking to the outside of the suspension system, the air pressure adjustment means allows air to be sucked into the gas chamber from the outside of the suspension system. Accordingly, it is possible to inhibit the air pressure in the gas chamber from reducing below the predetermined value.

It is preferable that the first air pressure adjustment means of the suspension system is structured such that air is sucked into the gas chamber from outside of the suspension system by extension and compression of the suspension system. If this structure is adopted, accordingly, when the suspension system extends and contracts due to bumps and dips in a road surface that are passed over while the vehicle is running, air is automatically sucked into the gas chamber from the outside of the suspension system. Thus, it is possible to easily inhibit the air pressure in the gas chamber from reducing below the predetermined value.

It is preferable that the first air pressure adjustment means of the suspension system includes a first check valve. If this structure is adopted, in the case that the air pressure in the gas chamber becomes smaller than the predetermined value, the first check valve allows air to be easily sucked into the gas chamber from the outside of the suspension system. In addition, it is possible to inhibit back flow of the air that is sucked into the gas chamber from the outside of the suspension system.

It is preferable that the gas chamber includes a first gas chamber filled with air that is compressed when the suspension system extends, and that expands when the suspension system is compressed, and a second gas chamber filled with air that expands when the suspension system extends, and that is compressed when the suspension system is compressed. If this structure is adopted, when the suspension system extends and is compressed, the air in the first gas chamber and the second gas chamber is compressed and expands, whereby it is easy to generate a reaction force. Accordingly, shock that occurs when the vehicle body and the vehicle wheel move relative to each can easily be absorbed.

In the above-described vehicle having the gas chamber that includes the first gas chamber and the second gas chamber, it is preferable that the suspension system includes an outer tube member, a shaft member that is moveably inserted inside the outer tube member, and a first piston that is attached to the shaft member. In addition, it is preferable that the first gas chamber is provided in a region that is, at the least, surrounded by an inner surface of the outer tube member, an outer surface of the shaft member, and the first piston. Moreover, it is preferable that the second gas chamber is provided in a region that is, at the least, surrounded by the inner surface of the outer tube member, and the first piston. If this structure is adopted, the first gas chamber and the second gas chamber can easily be provided.

In the vehicle including the suspension system that has the outer tube member, the shaft member, and the first piston, it is preferable that the shaft member has an oil chamber filled with oil, and that the suspension system further includes a second piston disposed within the oil chamber of the shaft member. In this structure, when the suspension system extends and compresses, the second piston moves inside the oil chamber of the shaft member and generates damping force on the suspension system. If this structure is adopted, it is possible to effectively generate damping force on the suspension system.

In the above-described vehicle having the gas chamber that includes the first gas chamber and the second gas chamber, the first gas chamber is preferably connected to the outside of the suspension system via the first air pressure adjustment means. If this structure is adopted, air can be sucked into the first gas chamber from the outside of the suspension system by the first air pressure adjustment means, whereby it is possible to inhibit the air pressure in the first gas chamber becoming smaller than the predetermined value.

In the above-described vehicle in which the first gas chamber is connected to the outside of the suspension system via the first air pressure adjustment means, it is preferable that air is sucked into the first gas chamber from the outside of the suspension system in the case that the air pressure in the first gas chamber becomes less than a predetermined value as a result of the air in the first gas chamber expanding when the suspension system is compressed. If this structure is adopted, it is easy for air to be automatically sucked into the first gas chamber from the outside of the suspension system when the suspension system is compressed.

In the above-described vehicle in which the first gas chamber is connect to the outside of the suspension system via the first air pressure adjustment means, it is preferable that the suspension system further includes second air pressure adjustment means that supplies air to the second gas chamber from the first gas chamber, and that when the air pressure in the second gas chamber becomes less than the air pressure in the first gas chamber as a result of expansion of the air in the second gas chamber when the suspension system extends, air is supplied from the first gas chamber to the second gas chamber via the second air pressure adjustment means. If this structure is adopted, in the case that the air pressure in the second gas chamber becomes less than the air pressure in the first gas chamber, it is possible for air to be supplied to the second gas chamber from the first gas chamber by the second air pressure adjustment means. As a result, it is possible to inhibit the air pressure in the second gas chamber from becoming smaller than a predetermined value.

In the above-described vehicle including the second air pressure adjustment means, the second air pressure adjustment means of the suspension system preferably includes a second check valve. If this structure is adopted, in the case that the air pressure in the second gas chamber becomes smaller than the air pressure in the first gas chamber, the second check valve allows air to be easily supplied from the first gas chamber to the second gas chamber. In addition, it is possible to inhibit back flow of the air that is supplied from the first gas chamber to the second gas chamber.

In the above-described vehicle having the gas chamber that includes the first gas chamber and the second gas chamber, it is preferable that the suspension system further includes third air pressure adjustment means that discharges air from the first gas chamber to the outside of the suspension system. In this structure, when the air pressure in the first gas chamber becomes larger than a predetermined value as a result of the air in the first gas chamber being compressed when the suspension system extends, air is discharged from the first gas chamber to the outside of the suspension system via the third air pressure adjustment means. As a result, it is possible to inhibit the air pressure in the first gas chamber from becoming larger than the predetermined value.

In the above-described vehicle in which the suspension system includes the third air pressure adjustment means, the third air pressure adjustment means preferably includes a third check valve. If this structure is adopted, in the case that the air pressure in the first gas chamber becomes larger than the predetermined value, the third check valve allows air to be easily discharged to the outside of the suspension system from the first gas chamber. In addition, it is possible to inhibit back flow of the air that is discharged to the outside of the suspension system from the first gas chamber.

In the above-described vehicle in which the suspension system includes the third air pressure adjustment means, the third air pressure adjustment means preferably has an adjustment member that adjusts the predetermined value of the air pressure at which the air in the first gas chamber is discharged to the outside of the suspension system via the third air pressure adjustment means. If this structure is adopted, it is possible for the adjustment member to adjust the air pressure in the first gas chamber, whereby it is possible to inhibit the air pressure in the first gas chamber from becoming too high or too low.

In the above-described vehicle, it is preferable that the suspension system is a rear suspension. If this structure is adopted, it is possible to inhibit the air pressure in the gas chamber of the rear suspension from becoming smaller than a predetermined value.

### BRIEF DESCRIPTION OF THE DRAWINGS

These and other aspects of the present invention will now be described, by way of example only, with reference to the appended drawings, in which:
Fig. 1 is a side view showing the overall structure of a motorcycle according to a first embodiment of the present invention;
Fig. 2 illustrates in more detail the structure around a rear suspension of the motorcycle shown in Fig. 1;
Fig. 3 is a cross-sectional view of the rear suspension of the motorcycle shown in Fig. 1, shown in an extended configuration;
Fig. 4 is a cross-sectional view of the rear suspension of the motorcycle shown in Fig. 1, shown in a compressed configuration;
Fig. 5 is a diagrammatic representation of the operation of the rear suspension of the motorcycle shown in Fig. 1;
Fig. 6 is a further diagrammatic representation of the operation of the rear suspension of the motorcycle shown in Fig. 1;
Fig. 7 is a cross-sectional view of a rear suspension of a motorcycle according to a second embodiment of the invention, wherein the rear suspension is shown in an extended configuration; and
Fig. 8 is a further cross-sectional view of the rear suspension shown in Fig. 7, shown in a compresses configuration.

### DETAILED DESCRIPTION OF THE DRAWINGS

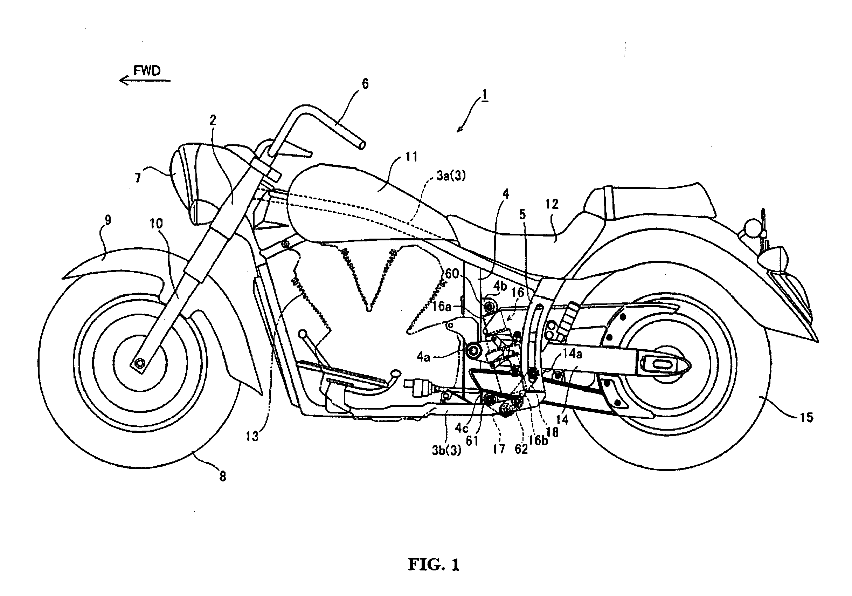

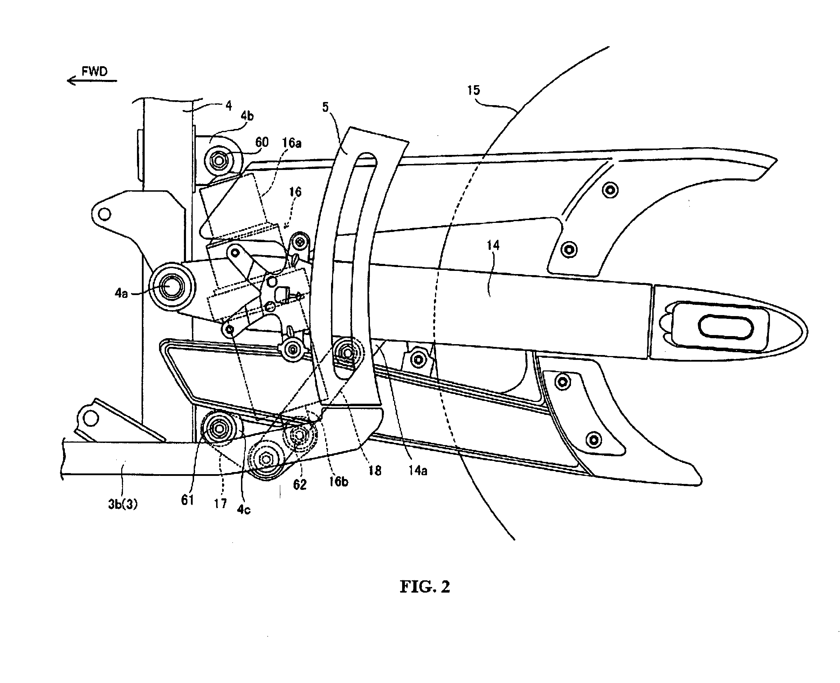

Fig. 1 is a side view that shows the overall structure of a motorcycle according to a first embodiment of the present invention. Fig. 2 to Fig. 4 are figures that illustrate in detail the structure of a rear suspension of the motorcycle according to the first embodiment shown in Fig. 1. Note that, the first embodiment describes a motorcycle that is one example of the vehicle of the invention. In the figures, the FWD direction indicates the forward direction in which the vehicle is intended to travel. Hereinafter, the structure of a motorcycle 1 according to the first embodiment of the invention will be explained in more detail with reference to Fig. 1 to Fig. 4.

In the motorcycle 1 according to the first embodiment of the invention, as can be seen in Fig. 1, a main frame 3 that extends in the front-rear direction is disposed to the rear of a head pipe 2. The main frame 3 includes an upper frame member 3a that extends rearward from the upper side, and a lower frame member 3b that extends rearward from a lower side. A rear section of the upper frame member 3a and a rear section of the lower frame member 3b are connected to a pivot shaft bearing member 4 and a connecting member 5. A body frame is structured from the head pipe 2, the main frame 3, the pivot shaft bearing member 4, and the connecting member 5. Note that, the head pipe 2, the main frame 3, the pivot shaft bearing member 4, and the connecting member 5 are one example of a "vehicle body" of the invention.

A handle 6 is attached to an upper section of the head pipe 2. Moreover, a front headlight 7 is provided to the front of the head pipe 2. A front wheel 8 and a front fender 9 disposed above the front wheel 8 are provided below the head pipe 2. The front wheel 8 is rotatably attached to lower end sections of a pair of front forks 10. The front forks 10 have a shock absorbing function that absorbs shock that occurs when the front wheel 8 and the vehicle body move relative to each other.

A fuel tank 11 is disposed in an upper section of the upper frame member 3a of the main frame 3 and a seat 12 is disposed to the rear of the fuel tank 11. An engine 13 is disposed below the upper frame member 3a of the main frame 3. Furthermore, as can be seen in Fig. 2, a pivot shaft 4a is provided in the pivot shaft bearing member 4. A rear arm 14 is swingably supported at a front end section thereof by the pivot shaft 4a such that the rear arm 14 can swing upward and downward. A rear wheel 15 is rotatably attached to a rear end section of the rear arm 14. Note that, the rear wheel 15 is one example of a "vehicle wheel" of the invention.

A support member 4b is provided in a rear section of the pivot shaft bearing member 4and an upper attachment member 16a of a rear suspension 16 is attached to the support member 4b using a screw 60. Note that, the rear suspension 16 is one example of a "suspension system" of the invention. Furthermore, a support member 4c is provided in a lower section of the rear section of the pivot shaft bearing member 4. A swinging member 17 is swingably attached to the support member 4c by a screw 61. A lower attachment member 16b of the rear suspension 16 is attached to the swinging member 17 by a screw 62. Furthermore, the swinging member 17 is connected to a support member 14a of the rear arm 14 by a connecting member 18. As a result, when the rear arm 14 swings upwards and downwards, the swinging member 17 swings centering on the support member 4c of the pivot shaft bearing member 4, whereby the rear suspension 16 extends and compresses.

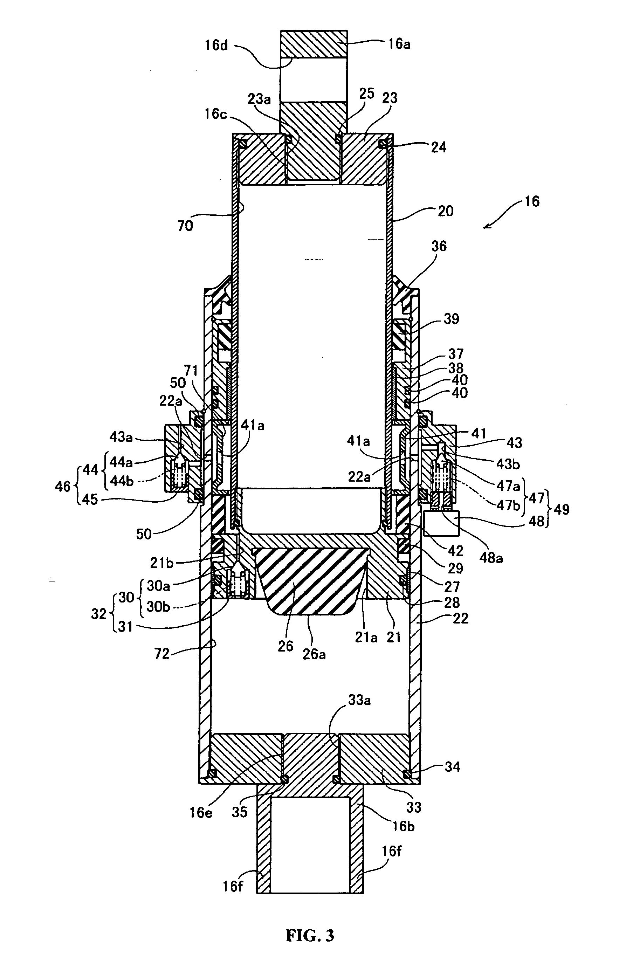

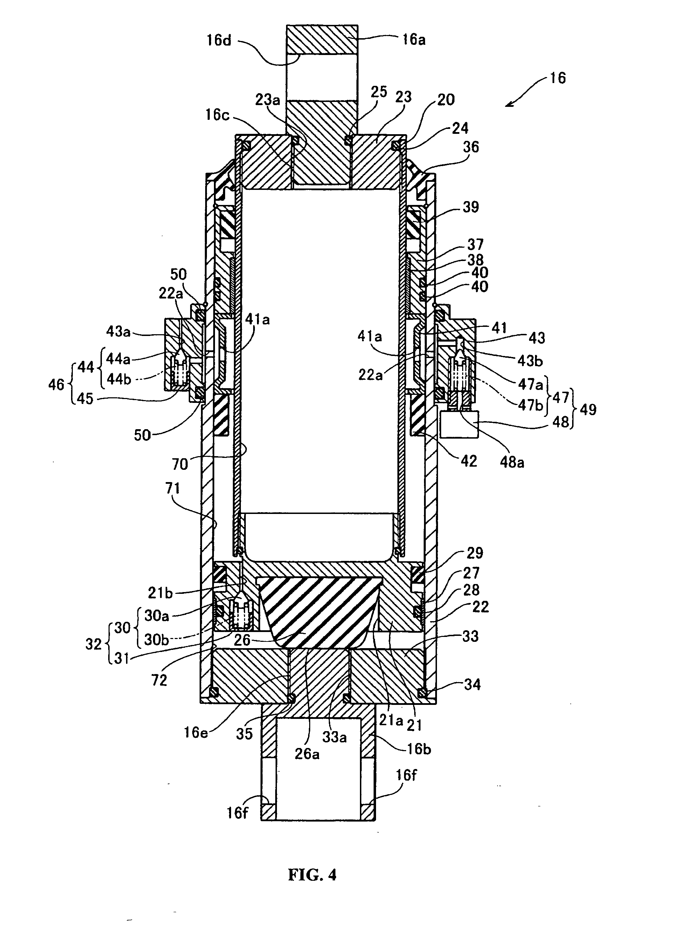

The rear suspension 16, as can be seen in Fig. 3 and Fig. 4, includes a rod 20, a piston 21, and an outer tube member 22. The rod 20 has a cylindrical shape and is fixed to the upper attachment member 16a. The piston 21 is attached to the rod 20, and the rod 20 and the piston 21 are disposed inside of the outer tube member 22, which is fixed to the lower attachment member 16b. Note that, the rod 20 is one example of a "shaft member" of the invention, and the piston 21 is one example of a "first piston member" of the invention.

An upper cap 23 is fixed to an upper end section of the rod 20 so as to block the opening at the upper section of the rod 20. A seal 24, which is an O-ring made of rubber, is disposed between an inner periphery surface of the rod 20 and an outer periphery surface of the upper cap 23. A screw member 16c at a lower section of the upper attachment member 16a is screwed into a screw hole 23a of the upper cap 23 in order to fix the upper attachment member 16a to the upper cap 23. A through hole 16d is provided in the upper attachment member 16a. The screw 60 (refer to Fig. 2) is inserted in the through hole 16d, whereby the upper attachment member 16a is attached to the support member 4b of the pivot shaft bearing member 4 (refer to Fig. 2). A seal 25, which is an O-ring made of rubber, is disposed between an inner periphery surface of the screw hole 23a of the upper cap 23 and the outer periphery surface of the lower section of the upper attachment member 16a.

The piston 21 is fixed to the inner periphery surface of the lower end section of the rod 20. An internal gas chamber 70, which is filled with air at an air pressure of around 1 atm (1.013 x 10⁵ Pa), is provided in the region surround by the inner periphery surface of the rod 20, the upper cap 23, and the piston 21. The piston 21 functions to divide the inside of the outer tube member 22 into an upper gas chamber 71 disposed to the upper side of the piston 21, and a lower gas chamber 72 disposed to the lower side of the piston 21. More specifically, the upper gas chamber 71 is provided in the region surrounded by the inner periphery surface of the outer tube member 22, the outer surface of the rod 20, and the piston 21, and the lower gas chamber 72 is provided in the region surrounded by the inner surface of the outer tube member 22, the piston 21 and a lower cap 33, described hereinafter. Note that, the upper gas chamber 71 is one example of a "gas chamber" and a "first gas chamber" of the invention, and the lower gas chamber 72 is one example of a "gas chamber" and a "second gas chamber" of the invention. The upper gas chamber 71 is structured such that the air is compressed when the rear suspension 16 extends (the state shown in Fig. 3) and the air is allowed to expand when the rear suspension 16 is compressed (the state shown in Fig. 4). The lower gas chamber 72 is structured such that the air is allowed to expand when the rear suspension 16 extends, and the air is compressed when the rear suspension 16 is compressed. In addition, the upper gas chamber 71 and the lower gas chamber 72 have an air pressure of around 9 atm (9 x 1.013 x 10⁵ Pa) when the rear suspension 16 extends (the state shown in Fig. 3). Note that, the air pressure in the upper gas chamber 71 and the lower gas chamber 72 can be selectively set to a different air pressure by changing the volume or the like of the upper gas chamber 71 and the lower gas chamber 72.

An attachment hole 21a is formed in a lower section of the piston 21, and a cushion rubber 26 is attached to the attachment hole 21a. A bottom surface 26a of the cushion rubber 26 is disposed to the lower side of a bottom surface of the piston 21, and when the rear suspension 16 is compressed, the bottom surface 26a of the cushion rubber 26 abuts against the lower cap 33. As a result, when the rear suspension 16 is compressed, it is possible to prevent the piston 21 from coming into direct contact with the lower cap 33.

A bearing 27 is attached between the outer periphery surface of the piston 21 and the inner periphery surface of the outer tube member 22. As a result, the piston 21 can more easily move in the axial direction of the outer tube member 22 along the inner periphery surface of the outer tube member 22. A seal 28, which in an O-ring made of rubber, is disposed between the outer periphery surface of the piston 21 and the bearing 27. Furthermore, a seal 29 made of rubber is disposed to the upper side of the seal 28 and between the outer periphery surface of the piston 21 and the inner periphery surface of the outer tube member 22. As a result of providing the seals 28 and 29, the air in the lower gas chamber 72 can be inhibited from leaking (moving) into the upper gas chamber 71. Note that, two or more of the seals 28 and 29 may be provided. In this case, the air in the lower gas chamber 72 can be more effectively inhibited from leaking (moving) to the upper gas chamber 71.

In the first embodiment, the piston 21 is provided with an air passage 21b that connects the upper gas chamber 71, and the lower gas chamber 72. A check valve 30 and a stopper 31 are provided in the air passage 21b. The check valve 30 includes a valve member 30a that opens and closes the air passage 21b, and a compression coil spring 30b that pushes the valve member 30a. The stopper 31 prevents the compression coil spring 30b from detaching from the piston 21. The check valve 30 (the valve member 30a, the compression coil spring 30b) and the stopper 31 structure or define an air pressure adjustment member 32. Note that, the check valve 30 is one example of a "second check valve" of the invention, and the air pressure adjustment member 32 is one example of "second air pressure adjustment means" of the invention. The air pressure adjustment member 32 is structured such that the compression coil spring 30b pushes the valve member 30a with a predetermined pushing force so that the air passage 21b is blocked. When the pressure of the air in the lower gas chamber 72 becomes smaller than the pressure of the air in the upper gas chamber 71, the air pressure adjustment member 32 opens the air passage 21b, whereby air is supplied from the upper gas chamber 71 to the lower gas chamber 72.

More specifically, in the first embodiment, the pushing force against the valve member 30a of the compression coil spring 30b is the smallest possible pushing force that is required to block the air passage 21b, and is set at a small pushing force that can be effectively ignored. As a result, when the rear suspension 16 extends, the capacity of the upper gas chamber 71 reduces and the air in the upper gas chamber 71 is compressed, while the capacity of the lower gas chamber 72 increases and the air in the lower gas chamber 72 expands. As a result, when the air pressure in the lower gas chamber 72 becomes less than the air pressure in the upper gas chamber 71, the valve member 30a moves to the lower gas chamber 72 side, and air is supplied from the upper gas chamber 71 to the lower gas chamber 72.

The lower cap 33 is fixed to the lower end section of the outer tube member 22 so as to block the opening at the lower section side of the outer tube member 22. A seal 34, which is an O-ring made of rubber, is disposed between the inner periphery surface of the outer tube member 22 and the outer periphery surface of the lower cap 33. A screw 16e of an upper section of the lower attachment member 16b is screwed into a screw hole 33a of the lower cap 33 such that the lower attachment member 16b is fixed to the lower cap 33. An insertion hole 16f is provided in the lower attachment member 16b, and the above-described screw 62 (refer to Fig. 2) is inserted in the insertion hole 16f. Accordingly, the lower attachment member 16b may be attached to the swinging member 17. A seal 35, which is an O-ring made of rubber, is disposed between the inner periphery surface of the screw hole 33a of the lower cap 33 and the outer periphery surface of the upper section of the lower attachment member 16b. The seals 34 and 35 inhibit air in the lower gas chamber 72 from leaking to the outside of the rear suspension 16. However, air can permeate though the rubber made seals 34 and 35 so in the long term air will gradually leak to the outside of the rear suspension 16 from the lower gas chamber 72.

A dust seal 36 is attached to the upper end section of the outer tube member 22 between the inner periphery surface of the outer tube member 22 and the outer periphery surface of the rod 20. The dust seal 36 inhibits entry of dirt or the like. Furthermore, a bearing support member 37 is fixed between the inner periphery surface of the outer tube member 22 and the outer periphery surface of the rod 20 at the lower side of the dust seal 36. A bearing 38 is attached between the inner periphery surface of the bearing support member 37 and the outer periphery surface of the rod 20. As a result, the rod 20 is able to move more easily in the axial direction of the outer tube member 22 along the inner periphery surface of the outer tube member 22. A seal 39 made of rubber is disposed between the inner periphery surface of the bearing support member 37 and the outer periphery surface of the rod 20. Furthermore, two seals 40, which are O-rings made of rubber, are disposed between the outer periphery surface of the bearing support member 37 and the inner periphery surface of the outer tube member 22. These seals 39 and 40 inhibit air in the upper gas chamber 71 from leaking to the outside of the rear suspension 16. However, air can permeate though the rubber made seals 39 and 40 so in the long term air will gradually leak to the outside of the rear suspension 16 from the upper gas chamber 71.

A metal ring 41 and a cushion rubber 42 fixed to the lower section of the metal ring 41 are disposed at the lower side of the bearing support member 37. When the rear suspension 16 extends, a bottom surface of the cushion rubber 42 abuts against an upper surface of the piston 21. As a result, when the rear suspension 16 extends, the piston 21 is prevented from directly coming into contact with the metal ring 41.

Air passage holes 41a and 22a are respectively formed in the metal ring 41 and the region of the outer tube member 22 where the metal ring 41 is fixed. A ring shaped member 43 is fixed to the outer periphery surface of the region of the outer tube member 22 where the metal ring 41 is fixed.

In the first embodiment, an air passage 43a and an air passage 43b are provided in the ring shaped member 43. The air passage 43a allows air to be sucked into the upper gas chamber 71 from the outside of the rear suspension 16. The air passage 43b allows air to be discharged to the outside of the rear suspension 16 from the upper gas chamber 71.

In the first embodiment, a check valve 44 and a stopper 45 are provided in the air passage 43a. The check valve 44 includes a valve member 44a that opens and closes the air passage 43a, and a compression coil spring 44b that pushes the valve member 44a. The stopper 45 prevents the compression coil spring 44b from detaching from the ring shaped member 43. The check valve 44 (the valve member 44a, the compression coil spring 44b) and the stopper 45 structure an air pressure adjustment member 46. Note that, the check valve 44 is one example of a "first check valve" of the invention, and the air pressure adjustment member 46 is one example of "first air pressure adjustment means" of the invention. The air pressure adjustment member 46 is structured such that the compression coil spring 44b pushes the valve member 44a with a predetermined pushing force so that the air passage 43a is blocked. When the pressure of the air in the upper gas chamber 71 becomes smaller than a predetermined value, the air pressure adjustment member 46 opens the air passage 43a, whereby air is sucked into the upper gas chamber 71 from outside of the rear suspension 16.

More specifically, in the first embodiment, the pushing force against the valve member 44a of the compression coil spring 44b is the smallest possible pushing force that is required to block the air passage 43a, and is set at a small pushing force that can be effectively ignored. As a result, when the rear suspension 16 is compressed, the capacity of the upper gas chamber 71 increases and the air in the upper gas chamber 71 expands. As a result, when the air pressure in the upper gas chamber 71 becomes less than the air pressure (atmospheric pressure) at the outside of the rear suspension 16, the valve member 44a moves to the upper gas chamber 71 side, and air is sucked into the side of the upper gas chamber 71 from outside of the rear suspension 16.

In the first embodiment, a check valve 47 and an adjustment screw 48 are provided in the air passage 43b. The check valve 47 includes a valve member 47a that opens and closes the air passage 43b, and a compression coil spring 47b that pushes the valve member 47a. The adjustment screw 48 prevents the compression coil spring 47b from detaching from the ring shaped member 43, and adjusts the air pressure value at which air is discharged from the upper gas chamber 71 to the outside of the rear suspension 16 by adjusting the pushing force of the compression coil spring 47b. The check valve 47 (the valve member 47a, the compression coil spring 47b) and the adjustment screw 48 structure an air pressure adjustment member 49. Note that, the check valve 47 is one example of a "third check valve" of the invention, and the adjustment screw 48 is one example of an "adjustment member" of the invention. The air pressure adjustment member 49 is one example of "third air pressure adjustment means" of the invention and is structured such that the compression coil spring 47b pushes the valve member 47a with a predetermined pushing force so that the air passage 43b is blocked. When the pressure of the air in the upper gas chamber 71 becomes larger than the predetermined value, the air pressure adjustment member 49 opens the air passage 43b, whereby air is discharged to the outside of the rear suspension 16 from the upper gas chamber 71.

In the first embodiment, when the air pressure in the upper gas chamber 71 becomes larger than around 9 atm (9 x 1.013 x 10⁵ Pa), the adjustment screw 48 is adjusted such that the air in the upper gas chamber 71 is discharged to the outside of the rear suspension 16. When the rear suspension 16 extends, the capacity of the upper gas chamber 71 reduces and the air in the upper gas chamber 71 is compressed. Accordingly, when the air pressure in the upper gas chamber 71 becomes more than 9 atm (9 x 1.013 x 10⁵ Pa), the valve member 47a moves to the outer side of the rear suspension 16, whereby air is discharged from the upper gas chamber 71 to the outside of the rear suspension 16. As a result, it is possible to inhibit the air pressure in the upper gas chamber 71 from becoming larger than the predetermined value (roughly 9 atm (9 x 1.013 x 10⁵ Pa)). Note that, an air passage 48a is provided in the adjustment screw 48. Air that passes through the air passage 43b is discharged to the outside of the rear suspension 16 via the air passage 48a of the adjustment screw 48.

Two seals 50, which are O-rings made of rubber, are disposed between the inner periphery surface of the ring shaped member 43 and the outer periphery surface of the outer tube member 22. As a result, air inside the air passages 43a and 43b is inhibited from leaking to the outside of the rear suspension 16.

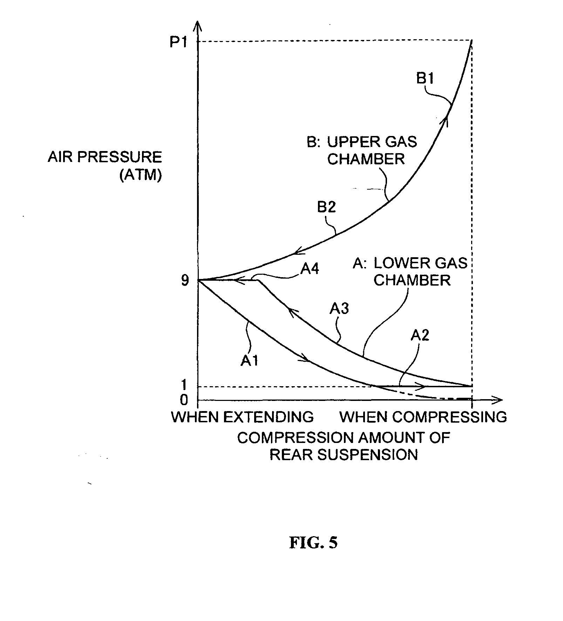

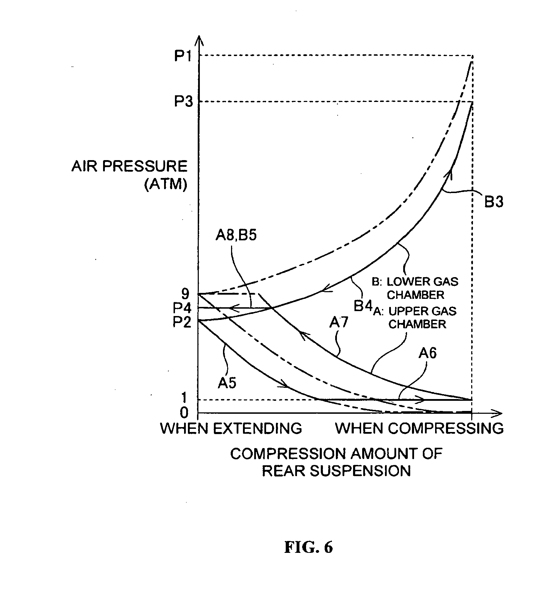

Fig. 5 and Fig. 6 illustrate the operation of the rear suspension of the motorcycle according to the first embodiment shown in Fig. 1. Accordingly, the operation of the rear suspension 16 of the motorcycle 1 according to the fist embodiment will now be explained with reference to Fig. 3 to Fig. 6.

An explanation will first be given about the situation when the air pressures in the upper gas chamber 71 and the lower gas chamber 72 are roughly 9 atm (9 x 1.013 x 10⁵ Pa) and the rear suspension 16 is extended (the state shown in Fig. 3) (namely, when air in the upper gas chamber 71 and the lower gas chamber 72 hardly leaks to the outside of the rear suspension 16).

When force acts on the rear suspension 16 in a direction that compresses the rear suspension 16, the rear suspension 16 is compressed against resistance of the air pressure in the lower gas chamber 72. In this case, in the first embodiment, the capacity of the upper gas chamber 71 increases and the air in the upper gas chamber 71 expands, whereby the air pressure in the upper gas chamber 71 reduces to roughly 1 atm (1.013 x 10⁵ Pa) as shown by A1 in Fig. 5. As shown in Fig. 4, as a result of the rear suspension 16 being compressed still further, the air pressure in the upper gas chamber 71 becomes smaller than 1 atm (1.013 x 10⁵ Pa). At this time, the air pressure adjustment member 46 causes air to be sucked into the upper gas chamber 71 from the outside of the rear suspension 16, whereby the air pressure in the upper gas chamber 71 is maintained at roughly 1 atm (1.013 x 10⁵ Pa), as shown by A2 in Fig. 5.

When the force acts on the rear suspension 16 in the direction that compresses the rear suspension 16 the rear suspension 16 compresses against the resistance of the air pressure in the lower gas chamber 72. In this case, the capacity of the lower gas chamber 72 reduces and the air in the lower gas chamber 72 is compressed, whereby the air pressure in the lower gas chamber 72 rises to P1 atm (a few tens atm) as shown by B1 in Fig. 5.

When a force acts on the rear suspension 16 in a direction that extends the rear suspension 16, the rear suspension 16 extends. In this case, the capacity of the upper gas chamber 71 reduces and the air in the upper gas chamber 71 is compressed, whereby the air pressure in the upper gas chamber 71 increases to roughly 9 atm (9 x 1.013 x 10⁵ Pa) as shown by A3 of Fig. 5. In the first embodiment, as shown in Fig. 3, when the rear suspension 16 extends still further, the air pressure in the upper gas chamber 71 becomes larger than roughly 9 atm (9 x 1.013 x 10⁵ Pa). At this time, the air pressure adjustment member 49 causes air to be discharged from the upper gas chamber 71 to the outside of the rear suspension 16, whereby the air pressure in the upper gas chamber 71 is maintained at roughly 9 atm (9 x 1.013 x 10⁵ Pa), as shown by A4 in Fig. 5.

When the force acts on the rear suspension 16 in the direction that extends the rear suspension 16, the rear suspension 16 extends. In this case, the capacity of the lower gas chamber 72 increases and the air in the lower gas chamber 72 expands, whereby the air pressure in the lower gas chamber 72 reduces to roughly 9 atm (9 x 1.013 x 10⁵ Pa) as shown by B2 of Fig. 5.

A description will now be given relating to the situation when the air pressures in the upper gas chamber 71 and the lower gas chamber 72 are P2 atm (less than roughly 9 atm (9 x 1.013 x 10⁵ Pa)) (refer to Fig. 6) and the rear suspension 16 is extended (the state shown in Fig. 3) (namely, when air has leaked from the upper gas chamber 71 and the lower gas chamber 72 to the outside of the rear suspension 16).

When force acts on the rear suspension 16 in a direction that compresses the rear suspension 16, the rear suspension 16 is compressed against resistance of the air pressure in the lower gas chamber 72. In this case, the capacity of the upper gas chamber 71 increases and the air in the upper gas chamber 71 expands, whereby the air pressure in the upper gas chamber 71 reduces to roughly 1 atm (1.013 x 10⁵ Pa) as shown by A5 in Fig. 6. As shown in Fig. 4, as a result of the rear suspension 16 being compressed still further, the air pressure in the upper gas chamber 71 becomes smaller than 1 atm (1.013 x 10⁵ Pa). At this time, the air pressure adjustment member 46 causes air to be sucked into the upper gas chamber 71 from the outside of the rear suspension 16, whereby the air pressure in the upper gas chamber 71 is maintained at roughly 1 atm (1.013 x 10⁵ Pa), as shown by A6 in Fig. 6.

When the force acts on the rear suspension 16 in the direction that compresses the rear suspension 16, the rear suspension 16 compresses against the resistance of the air pressure in the lower gas chamber 72. In this case, the capacity of the lower gas chamber 72 reduces and the air in the lower gas chamber 72 is compressed, whereby the air pressure in the lower gas chamber 72 rises to P3 atm (which is less than P1 atm) as shown by B3 in Fig. 6.

Next, when a force acts on the rear suspension 16 in a direction that extends the rear suspension 16, the rear suspension 16 extends. In this case, the capacity of the upper gas chamber 71 reduces and the air in the upper gas chamber 71 is compressed, whereby the air pressure in the upper gas chamber 71 increases to roughly P4 atm, as shown by A7 of Fig. 6.

When the force acts on the rear suspension 16 in a direction that extends the rear suspension 16, the rear suspension 16 extends. In this case, the capacity of the lower gas chamber 72 increases and the air in the lower gas chamber 72 expands, whereby the air pressure in the lower gas chamber 72 reduces to P4 atm, as shown by B4 of Fig. 6.

In the first embodiment, as shown in Fig. 3, when the rear suspension 16 extends still further, air is supplied from the upper gas chamber 71 to the lower gas chamber 72 by the air pressure adjustment member 32. At this time, the air pressures in the upper gas chamber 71 and the lower gas chamber 72 are maintained at P4 atm, as shown by A8 and B5 of Fig. 6.

After this, when forces act on the rear suspension 16 in directions that alternately compress and extend the rear suspension 16, the air pressures in the upper gas chamber 71 and the lower gas chamber 72 rise from P4 atm to roughly 9 atm (9 x 1.013 x 10⁵ Pa). In this manner, the air pressures in the upper gas chamber 71 and the lower gas chamber 72 can be maintained at roughly 9 atm (9 x 1.013 x 10⁵ Pa) when the rear suspension 16 is extended.

In the first embodiment, as described above, the air pressure adjustment member 46 is provided that functions such that, when the air in the upper gas chamber 71 has expanded due to the rear suspension 16 being compressed and the air pressure in the upper gas chamber 71 is less than the air pressure at the outside of the rear suspension 16, air is sucked into the upper gas chamber 71 from the outside of the rear suspension 16. As a result, in the case that the air pressure in the upper gas chamber 71 becomes smaller than the predetermined value due to the air in the upper gas chamber 71 gradually leaking to the outside of the rear suspension 16, the air pressure adjustment member 46 allows air to be sucked into the upper gas chamber 71 from the outside of the rear suspension 16. Accordingly, it is possible to inhibit the air pressure in the upper gas chamber 71 from reducing below the predetermined value due to extension and compression of the rear suspension 16.

Also, the air pressure adjustment member 46 of the rear suspension 16 is structured such that air is sucked into the upper gas chamber 71 from the outside of the rear suspension 16 as a result of extension and compression of the rear suspension 16. Accordingly, when the rear suspension 16 extends and compresses due to bumps and dips in a road surface that are passed over while the vehicle is running, air is automatically sucked into the upper gas chamber 71 from the outside of the rear suspension 16. Thus, it is possible to easily inhibit the air pressure in the upper gas chamber 71 from reducing below the predetermined value.

The air pressure adjustment member 32 is provided that functions such that, in the case that the air pressure in the lower gas chamber 72 becomes smaller than the air pressure in the upper gas chamber 71 due to expansion of the air in the lower gas chamber 72 when the rear suspension 16 extends, air is supplied to the lower gas chamber 72 from the upper gas chamber 71. As a result, the air pressure adjustment member 32 allows air to be supplied from the upper gas chamber 71 to the lower gas chamber 72, whereby it is possible to inhibit the air pressure in the lower gas chamber 72 from reducing below the predetermined value.

The air pressure adjustment member 49 is provided that functions such that, in the case that the air pressure in the upper gas chamber 71 becomes more than roughly 9 atm (9 x 1.013 x 10⁵ Pa) due to the air in the upper gas chamber 71 being compressed when the rear suspension 16 extends, air is discharged from the upper gas chamber 71 to the outside of the rear suspension 16. As a result, in the case that the air pressure in the upper gas chamber 71 becomes larger than roughly 9 atm (9 x 1.013 x 10⁵ Pa), air can be discharged to the outside of the rear suspension 16 from the upper gas chamber 71. Accordingly, the air pressure in the upper gas chamber 71 can be inhibited from becoming more than roughly 9 atm (9 x 1.013 x 10⁵ Pa).

### Second Embodiment

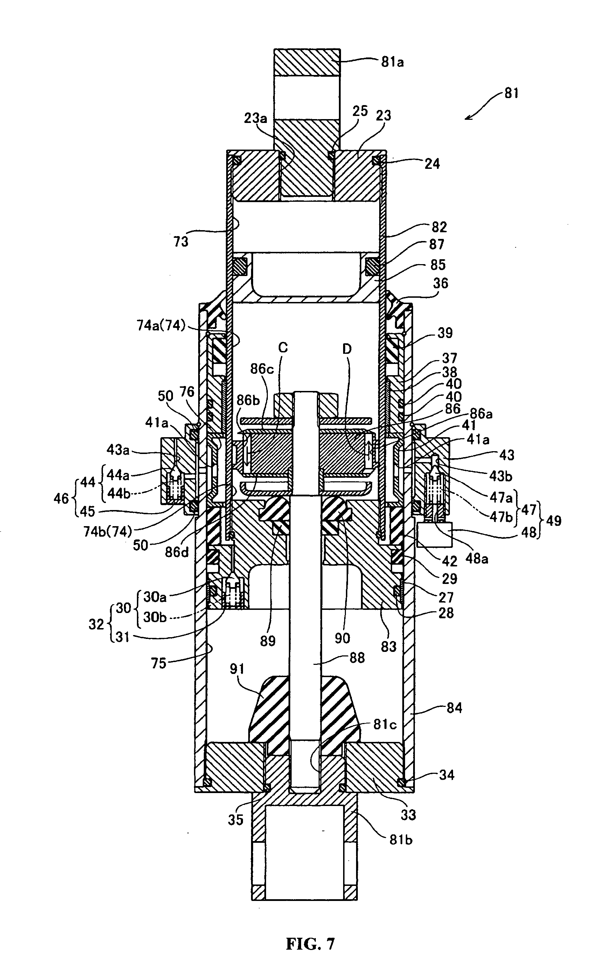

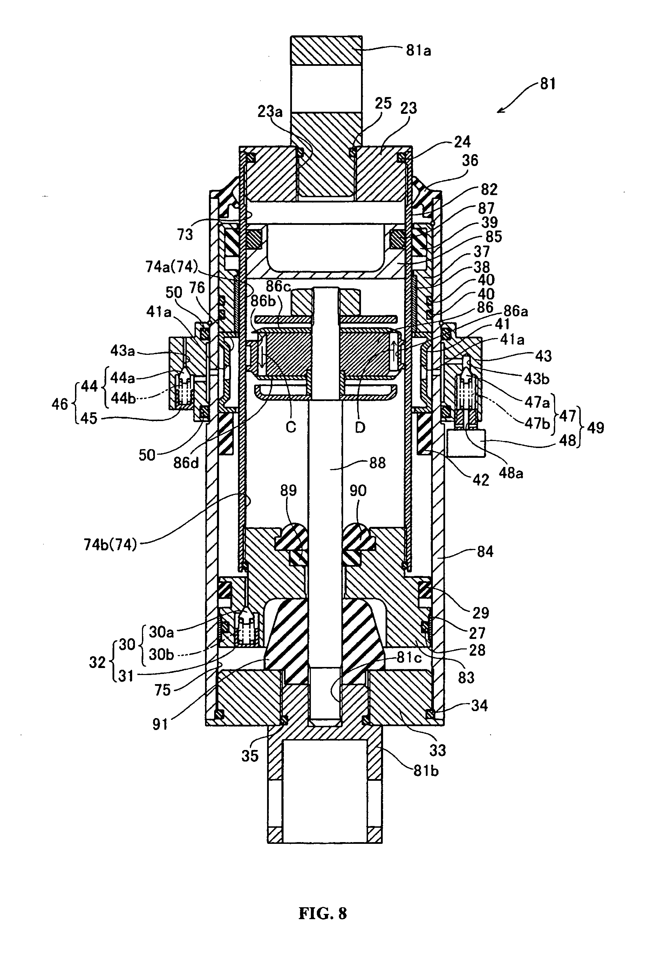

Fig. 7 and Fig. 8 are figures that illustrate in detail the structure of a rear suspension of a motorcycle according to a second embodiment of the invention. In the second embodiment, unlike the first embodiment, an example providing a damping mechanism to the rear suspension will be described.

In the second embodiment, a rear suspension 81, as shown in Fig. 7 and Fig. 8, includes a rod 82, a piston 83, and an outer tube member 84. The rod 82 has a cylindrical shape and is fixed to an upper attachment member 81a. The piston 83 structures a damping mechanism and is attached to a lower section of the rod 82. The rod 82 and the piston 83 are disposed inside of the outer tube member 84, which is fixed to the side of the lower attachment member 81b. Note that, the rod 82 is one example of a "shaft member" of the invention, and the piston 83 is one example of a "first piston member" of the invention.

In the second embodiment, pistons 85 and 86 are disposed inside of the rod 82. Furthermore, the inside of the rod 82 is divided into an inner gas chamber 73 disposed to the upper side of the piston 85 and an oil chamber 74 disposed to the lower side of the piston 85. The inner gas chamber 73 is filled with air, and the oil chamber 74 is filled with oil. The piston 86 divides the inside of the oil chamber 74 into an upper oil chamber 74a that is disposed to the upper side of the piston 86 and a lower oil chamber 74b that is disposed to the lower side of the piston 86. Note that, the piston 86 is one example of a "second piston member" of the invention.

A seal 87, which is an O-ring made of rubber, is disposed between the outer periphery surface of the piston 85 and the inner periphery surface of the rod 82. Moreover, the piston 85 can move in the axial direction of the rod 82 along the inner periphery surface of the rod 82.

A plurality of orifices 86a and 86b that allow oil to pass through are formed in the piston 86. The orifices 86a function to allow oil in the lower oil chamber 74b that is to the lower side of the piston 86 to pass through to the upper oil chamber 74a. The orifices 86b function to allow oil in the upper oil chamber 74a to pass through to the lower oil chamber 74b, which is to the lower side. In addition, a washer 86c is disposed to the upper side of the plurality of orifices 86a and 86b, and blocks the upper surfaces of the orifices 86a while leaving the upper surfaces of the orifices 86b open. In addition, a washer 86d is disposed to the lower side of the plurality of orifices 86a and 86b, and leaves the lower surfaces of the orifices 86a open while closing the lower surfaces of the orifices 86b.

The piston 86 is fixed to a rod 88 that is fixed to a through hole 81c of a lower attachment member 81b. As a result, when the rear suspension 81 extends and compresses, an outer periphery surface of the piston 86 moves in the axial direction of the rod 82 along the inner periphery surface thereof.

The piston 83 is provided in the lower end section of the rod 82 and functions in the same manner as the piston 21 of the first embodiment. More specifically, the air pressure adjustment member 32 is provided in the piston 83 as in the first embodiment. The air pressure adjustment member 32 functions such that, in the case that the air pressure in a lower gas chamber 75 that is disposed to the lower side of the piston 83 becomes smaller than the air pressure in an upper gas chamber 76, air is supplied from the upper gas chamber 76 that is disposed to the upper side of the piston 83 to the lower gas chamber 75. Note that, the lower gas chamber 75 is one example of a "gas chamber" and a "second gas chamber" of the invention, and the upper gas chamber 76 is one example of a "gas chamber" and a "first gas chamber" of the invention.

A seal 89 made of rubber is disposed between the inner periphery surface of the piston 83 and the outer periphery surface of the rod 88. Furthermore, a cushion rubber 90 is attached to an upper section of the piston 83. An upper surface of the cushion rubber 90 is disposed to the upper side of an upper surface of the piston 83, and when the rear suspension 81 extends (the state shown in Fig. 7), the upper surface of the cushion rubber 90 abuts against the piston 86. As a result, when the rear suspension 81 extends, it is possible to prevent the piston 83 from coming into direct contact with the piston 86. In addition, a cushion rubber 91 is attached to a lower section of the rod 88. An upper surface of the cushion rubber 91 is structured such that the upper surface of the cushion rubber 91 abuts against the piston 83 when the rear suspension 81 is compressed (the state shown in Fig. 8). As a result, when the rear suspension 81 is compressed, it is possible to prevent the piston 83 from coming into direct contact with the lower cap 33.

Note that, the remaining structure of the second embodiment is the same as the structure of the first embodiment, and thus an explanation will be omitted here.

The operation of the rear suspension 81 of the motorcycle of the second embodiment will now be explained with reference to Fig. 7 and Fig. 8.

First, the situation when force acts on the rear suspension 81 in a direction that compresses the rear suspension 81 will be explained. When force acts on the rear suspension 81 in the direction that compresses the rear suspension 81, the rear suspension 81 is compressed against resistance of the air pressure in the lower gas chamber 75, whereby damping force is generated.

More specifically, as shown in Fig. 8, when the rod 82 moves downwards with respect to the outer tube member 84 and the piston 86, the pressure of the upper oil chamber 74a increases, and the washer 86d of the piston 86 is opened. In addition, the oil inside the upper oil chamber 74a flows in the direction indicated by arrow C through the orifice 86b of the piston 86, and flows into the lower oil chamber 74b. At this time, a damping force is generated as a result of the resistance of the oil flowing through the orifice 86b of the piston 86.

Next, the situation when force acts on the rear suspension 81 in the direction that extends the rear suspension 81 will be explained. When force acts on the rear suspension 81 in the direction that causes the rear suspension 81 to extend, the rear suspension 81 extends, whereby damping force is generated.

More specifically, as shown in Fig. 7, when the rod 82 moves upwards with respect to the outer tube member 84 and the piston 86, the pressure of the lower oil chamber 74b increases, and the washer 86c of the piston 86 is opened. The oil inside the lower oil chamber 74b flows in the direction indicated by arrow D through the orifice 86a of the piston 86, and flows into the upper oil chamber 74a. At this time, a damping force is generated as a result of the resistance of the oil flowing through the orifice 86a of the piston 86.

Note that, the other parts of the operation of the second embodiment are the same as the operation of the first embodiment. More specifically, when the air pressure in the upper gas chamber 76 becomes smaller than the air pressure at the outside of the rear suspension 81 when the rear suspension 81 is compressed, air is sucked into the upper gas chamber 76 from the outside of the rear suspension 81. On the other hand, when the air pressure in the lower gas chamber 75 becomes smaller than the air pressure in the upper gas chamber 76 when the rear suspension 81 extends, air is supplied from the upper gas chamber 76 to the lower gas chamber 75. Additionally, when the air pressure in the upper gas chamber 76 becomes more than the predetermined value (roughly 9 atm (9 x 1.013 x 10⁵ Pa)), air is discharged from the upper gas chamber 76 to the outside of the rear suspension 81.

In the second embodiment, as described above, the piston 86 is moved in the axial direction of the rod 82 along the inner periphery surface of the rod 82 when the rear suspension 81 extends or compresses. As a result, oil passes through the washers 86c and 86d of the piston 86, thereby generating damping force on the rear suspension 81. Accordingly, it is possible to effectively dampen the extension and compression of the rear suspension 81.

Note that, the other effects of the second embodiment are the same as those of the first embodiment.

The embodiments disclosed herein are illustrative in all respects, and are not intended to limit the invention in any way. The scope of the invention is defined by the claims and not by the explanation of the above embodiments. Accordingly, all modifications that fall within the scope of the claims are included in the invention.

For example, the above-described embodiments explain a motorcycle as one example of the vehicle provided with the suspension system. However, the invention is not limited to this, and so long as a vehicle is provided with the suspension system, the invention may be applied to other vehicles such as an automobile, a bicycle, a three-wheeled vehicle, or an ATV (All Terrain Vehicle).

In addition, in the above-described embodiments, examples are explained in which the invention is applied to a rear suspension as an example of the suspension system. However, the invention is not limited to this, and may be applied to a front fork.

Moreover, in the above-described embodiments, examples are explained in which the air pressure adjustment member is provided that functions such that, in the case that the air pressure in the upper gas chamber is more than roughly 9 atm (9 x 1.013 x 10⁵ Pa) (the predetermined value), air is discharged from the upper gas chamber to the outside of the rear suspension in order to inhibit the air pressure in the upper gas chamber from becoming more than roughly 9 atm (9 x 1.013 x 10⁵ Pa) (the predetermined value). However, the invention is not limited to this, and the air pressure adjustment member that inhibits the air pressure in the upper gas chamber from becoming more than the predetermined value need not be provided.

In addition, in the above-described embodiments, an example is described in which the adjustment screw is adjusted such that the air pressure in the upper gas chamber becomes roughly 9 atm (9 x 1.013 x 10⁵ Pa) when the rear suspension is compressed. However, the invention is not limited to this and the adjustment screw may be adjusted such that the air pressure in the upper gas chamber becomes an air pressure that is different from 9 atm (9 x 1.013 x 10⁵ Pa).

Moreover, in the above-described second embodiment, an example is explained in which the piston that structures the damping mechanism is provided inside the rod. However, the invention is not limited to this, and the piston that structures the damping mechanism may be provided outside of the rod, or the damping mechanism may be structured using a member other than a piston.

### Description of the Reference Numerals and Signs

- 1: Motorcycle (Vehicle)
- 2: Head Pipe (Vehicle Body)
- 3: Main Frame (Vehicle Body)
- 4: Pivot Shaft Support Member (Vehicle Body)
- 5: Connecting Member (Vehicle Body)
- 15: Rear Wheel (Vehicle Wheel)
- 16: Rear Suspension (Suspension System)
- 20,: 82 Rod (Shaft Member)
- 21,: 83 Piston (First Piston Member)
- 22,: 84 Outer Tube Member
- 30: Check Valve (Second Check Valve)
- 32: Air Pressure Adjustment Member (Second Air Pressure Adjustment Means)
- 44: Check Valve (First Check Valve)
- 46: Air Pressure Adjustment Member (First Air Pressure Adjustment Means)
- 47: Check Valve (Third Check Valve)
- 48: Adjustment Screw (Adjustment Member)
- 49: Air Pressure Adjustment Member (Third Air Pressure Adjustment Means)
- 71, 76: Upper Gas Chamber (Gas Chamber, First Gas Chamber)
- 72, 75: Lower Gas Chamber (Gas Chamber, Second Gas Chamber)
- 74: Oil Chamber
- 86: Piston (Second Piston Member)

## Claims

1. A vehicle (1) comprising: (45) a vehicle body;
a vehicle wheel (15); and
a suspension system (16) disposed between the vehicle body and the vehicle wheel (15), wherein the suspension system (16) comprises an air filled gas chamber (71, 72, 75, 76) and first air pressure adjustment means (46) that is structured such that the air is sucked into the gas chamber (71, 72, 75, 76) from outside of the suspension system (16) when the air pressure in the gas chamber (71, 72, 75, 76) falls below a predetermined value; and
the gas chamber (71, 72, 75, 76) comprises:
a first gas chamber (71, 76) filled with air that is compressed when the suspension system (16) extends, and that expands when the suspension system (16) is compressed, and
a second gas chamber (72, 75) filled with air that expands when the suspension system (16) extends, and that is compressed when the suspension system (16) is compressed; wherein
the suspension system (16) further comprises second air pressure adjustment means (32) that supplies air to the second gas chamber (72, 75) from the first gas chamber (71, 76); and
the second air pressure adjustment means (32) is adapted to open an air passage (21b) between the first (71, 76) and second (72, 75) gas chambers when the pressure of air in the second (72, 75) gas chamber becomes smaller than the pressure of air in the first (71, 76) gas chamber.

2. The vehicle (1) according to claim 1, wherein the first air pressure adjustment means (46) is structured such that the air is sucked into the gas chamber (71, 72, 75, 76) from outside of the suspension system (16) by extension and compression of the suspension system (16).

3. The vehicle (1) according to claim 1 or 2, wherein the first air pressure adjustment means (46) includes a first check valve (44).

4. The vehicle (1) according to any preceding claim, wherein the suspension system (16) includes an outer tube member (22, 84), a shaft member (20, 82) that is moveably inserted inside the outer tube member (22, 84), and a first piston (21, 22) that is attached to the shaft member (20, 82).

5. The vehicle (1) according to claim 4, wherein the first gas chamber (71, 76) is provided in a region that is, at the least, surrounded by an inner surface of the outer tube member (22, 84), an outer surface of the shaft member (20, 82), and the first piston (21, 83).

6. The vehicle (1) according to claim 4 or claim 5, wherein the second gas chamber (72, 75) is provided in a region that is, at the least, surrounded by the inner surface of the outer tube member (22, 84), and the first piston (21, 83).

7. The vehicle (1) according to any of claims 4 to 6, wherein the shaft member (82) comprises an oil chamber (74) filled with oil.

8. The vehicle (1) according to claim 7, wherein the suspension system (16) further comprises a second piston (86) disposed within the oil chamber (74).

9. The vehicle (1) according to claim 8, wherein when the suspension system (16) extends and compresses, the second piston (86) moves inside the oil chamber (74) of the shaft member (82) and generates damping force on the suspension system (16).

10. The vehicle (1) according to any one of the preceding claims, wherein the first gas chamber (71, 76) is connected to outside of the suspension system (16) via the first air pressure adjustment means (46).

11. The vehicle (1) according to any one of the preceding claims, wherein air is sucked into the first gas chamber (71, 76) from outside of the suspension system (16) in the case that the air pressure in the first gas chamber (71, 76) becomes less than a predetermined value as a result of the air in the first gas chamber (71, 76) expanding when the suspension system (16) is compressed.

12. The vehicle (1) according to any preceding claim, wherein the second air pressure adjustment means (32) of the suspension system (16) comprises a second check valve (30).

13. The vehicle (1) according to any of the preceding claims, wherein the suspension system (16) further comprises third air pressure adjustment means (49) that discharges air from the first gas chamber (71, 76) to outside of the suspension system (16).

14. The vehicle (1) according to claim 13, wherein when the air pressure in the first gas chamber (71, 76) becomes larger than a predetermined value as a result of the air in the first gas chamber (71, 76) being compressed when the suspension system (16) extends, air is discharged from the first gas chamber (71, 76) to outside of the suspension system (16) via the third air pressure adjustment means (49).

15. The vehicle (1) according to claim 13 or 14, wherein the third air pressure adjustment means (49) of the suspension system comprises a third check valve (47).

16. The vehicle according to claim 13, 14 or 15, wherein the third air pressure adjustment means (49) has an adjustment member (48) that adjusts the predetermined value of the air pressure at which the air in the first gas chamber (71, 76) is discharged from the first gas chamber (71, 76) to outside of the suspension system (16) via the third air pressure adjustment means (49).

17. The vehicle (1) according to any preceding claim, wherein the suspension system (16) is a rear suspension.

18. A suspension system (16) adapted to be disposed between a vehicle body and a vehicle wheel (15), wherein the suspension system (16) comprises an air filled gas chamber (71, 72, 75, 76) and first air pressure adjustment means (46) that is structured such that the air is sucked into the gas chamber (71, 72, 75, 76) from outside of the suspension system (16) when the air pressure in the gas chamber (71, 72, 75, 76) falls below a predetermined value; and
the gas chamber (71, 72, 75, 76) comprises:
a first gas chamber (71, 76) filled with air that is compressed when the suspension system (16) extends, and that expands when the suspension system (16) is compressed, and
a second gas chamber (72, 75) filled with air that expands when the suspension system (16) extends, and that is compressed when the suspension system (16) is compressed; wherein
the suspension system (16) further comprises second air pressure adjustment means (32) that supplies air to the second gas chamber (72, 75) from the first gas chamber (71, 76); and
the second air pressure adjustment means (32) is adapted to open an air passage (21b) between the first (71, 76) and second (72, 75) gas chambers when the pressure of air in the second (72, 75) gas chamber becomes smaller than the pressure of air in the first (71, 76) gas chamber.

## Patentansprüche

1. Fahrzeug (1), das aufweist:
eine Fahrzeugkarosserie;
ein Fahrzeugrad (15); und
ein Aufhängungssystem (16), das zwischen der Fahrzeugkarosserie und dem Fahrzeugrad (15) angeordnet ist, wobei das Aufhängungssystem (16) eine luftgefüllte Gaskammer (71, 72, 75, 76) und eine erste Luftdruckreguliereinrichtung (46) aufweist, die so aufgebaut ist, dass Luft in die Gaskammer (71, 72, 75, 76) von außerhalb des Aufhängungssystems (16) angesaugt wird, wenn der Luftdruck in der Gaskammer (71, 72, 75, 76) auf unterhalb eines vorgegebenen Wertes abfällt; und
wobei die Gaskammer (71, 72, 75, 76) aufweist:
eine erste Gaskammer (71, 76), die mit Luft gefüllt ist, die zusammengedrückt wird, wenn sich das Aufhängungssystem (16) ausdehnt, und die expandiert, wenn das Aufhängungssystem (16) zusammengedrückt wird; und
eine zweite Gaskammer (72, 75), die mit Luft gefüllt ist, die expandiert, wenn sich das Aufhängungssystem (16) ausdehnt, und die zusammengedrückt wird, wenn das Aufhängungssystem (16) zusammengedrückt wird; wobei
das Aufhängungssystem (16) außerdem eine zweite Luftdruckreguliereinrichtung (32) aufweist, die Luft zur zweiten Gaskammer (72, 75) von der ersten Gaskammer (71, 76) zuführt; und
die zweite Luftdruckreguliereinrichtung (32) so ausgebildet ist, dass sie einen Luftdurchgang (21b) zwischen der ersten (71, 76) und der zweiten Gaskammer (72, 75) öffnet, wenn der Luftdruck in der zweiten Gaskammer (72, 75) kleiner wird als der Luftdruck in der ersten Gaskammer (71, 76).

2. Fahrzeug (1) nach Anspruch 1, bei dem die erste Luftdruckreguliereinrichtung (46) so aufgebaut ist, dass die Luft in die Gaskammer (71, 72, 75, 76) von außerhalb des Aufhängungssystems (16) durch Ausdehnung und Zusammendrücken des Aufhängungssystems (16) angesaugt wird.

3. Fahrzeug (1) nach Anspruch 1 oder 2, bei dem die erste Luftdruckreguliereinrichtung (46) ein erstes Regulierventil (44) umfasst.

4. Fahrzeug (1) nach einem der vorhergehenden Ansprüche, bei dem das Aufhängungssystem (16) umfasst: ein äußeres Rohrelement (22, 84); ein Wellenelement (20, 82), das beweglich in das äußere Rohrelement (22, 84) eingesetzt wird; und einen ersten Kolben (21, 83), der am Wellenelement (20, 82) befestigt ist.

5. Fahrzeug (1) nach Anspruch 4, bei dem die erste Gasammer (71, 76) in einem Bereich vorhanden ist, der mindestens durch eine Innenfläche des äußeren Rohrelementes (22, 84), eine Außenfläche des Wellenelementes (20, 82) und den ersten Kolben (21, 83) umgeben ist.

6. Fahrzeug (1) nach Anspruch 4 oder Anspruch 5, bei dem zweite Gasammer (72, 75) in einem Bereich vorhanden ist, der mindestens durch die Innenfläche des äußeren Rohrelementes (22, 84) und den ersten Kolben (21, 83) umgeben ist.

7. Fahrzeug (1) nach einem der Ansprüche 4 bis 6, bei dem das Wellenelement (82) eine Ölkammer (74) aufweist, die mit Öl gefüllt ist.

8. Fahrzeug (1) nach Anspruch 7, bei dem das Aufhängungssystem (16) außerdem einen zweiten Kolben (86) aufweist, der innerhalb der Ölkammer (74) angeordnet ist.

9. Fahrzeug (1) nach Anspruch 8, bei dem, wenn sich das Aufhängungssystem (16) ausdehnt und zusammendrückt, sich der zweite Kolben (86) innerhalb der Ölkammer (74) des Wellenelementes (82) bewegt und eine Dämpfungskraft auf das Aufhängungssystem (16) erzeugt.

10. Fahrzeug (1) nach einem der vorhergehenden Ansprüche, bei dem die erste Gaskammer (71, 76) mit der Außenseite des Aufhängungssystems (16) mittels der ersten Luftdruckreguliereinrichtung (46) verbunden ist.

11. Fahrzeug (1) nach einem der vorhergehenden Ansprüche, bei dem Luft in die erste Gaskammer (71, 76) von außerhalb des Aufhängungssystems (16) in dem Fall angesaugt wird, wenn der Luftdruck in der ersten Gaskammer (71, 76) kleiner wird als ein vorgegebener Wert, im Ergebnis dessen, dass die Luft in der ersten Gaskammer (71, 76) expandiert, wenn das Aufhängungssystem (16) zusammengedrückt wird.

12. Fahrzeug (1) nach einem der vorhergehenden Ansprüche, bei dem die zweite Luftdruckreguliereinrichtung (32) des Aufhängungssystems (16) ein zweites Regulierventil (30) aufweist.

13. Fahrzeug (1) nach einem der vorhergehenden Ansprüche, bei dem das Aufhängungssystem (16) außerdem eine dritte Luftdruckreguliereinrichtung (49) aufweist, die Luft aus der ersten Gaskammer (71, 76) nach außerhalb des Aufhängungssystems (16) ablässt.

14. Fahrzeug (1) nach Anspruch 13, bei dem, wenn der Luftdruck in der ersten Gaskammer (71, 76) größer wird als ein vorgegebener Wert, im Ergebnis dessen, dass die Luft in der ersten Gaskammer (71, 76) zusammengedrückt wird, wenn sich das Aufhängungssystem (16) ausdehnt, Luft aus der ersten Gaskammer (71, 76) nach außerhalb des Aufhängungssystems (16) mittels der dritten Luftdruckreguliereinrichtung (49) abgelassen wird.

15. Fahrzeug (1) nach Anspruch 13 oder 14, bei dem die dritte Luftdruckreguliereinrichtung (49) des Aufhängungssystems ein drittes Regulierventil (47) aufweist.

16. Fahrzeug (1) nach Anspruch 13, 14 oder 15, bei dem die dritte Luftdruckreguliereinrichtung (49) ein Regulierelement (48) aufweist, das den vorgegebenen Wert des Luftdruckes reguliert, bei dem die Luft in der ersten Gaskammer (71, 76) aus der ersten Gaskammer (71, 76) nach außerhalb des Aufhängungssystems (16) mittels der dritten Luftdruckreguliereinrichtung (49) abgelassen wird.

17. Fahrzeug (1) nach einem der vorhergehenden Ansprüche, bei dem das Aufhängungssystem (16) eine Hinterradaufhängung ist.

18. Aufhängungssystem (16), das so ausgebildet ist, das es zwischen einer Fahrzeugkarosserie und einem Fahrzeugrad (15) angeordnet wird, wobei das Aufhängungssystem (16) eine luftgefüllte Gaskammer (71, 72, 75, 76) und eine erste Luftdruckreguliereinrichtung (46) aufweist, die so aufgebaut ist, dass Luft in die Gaskammer (71, 72, 75, 76) von außerhalb des Aufhängungssystems (16) angesaugt wird, wenn der Luftdruck in der Gaskammer (71, 72, 75, 76) auf unterhalb eines vorgegebenen Wertes abfällt; und
wobei die Gaskammer (71, 72, 75, 76) aufweist:
eine erste Gaskammer (71, 76), die mit Luft gefüllt ist, die zusammengedrückt wird, wenn sich das Aufhängungssystem (16) ausdehnt, und die expandiert, wenn das Aufhängungssystem (16) zusammengedrückt wird; und
eine zweite Gaskammer (72, 75), die mit Luft gefüllt ist, die expandiert, wenn sich das Aufhängungssystem (16) ausdehnt, und die zusammengedrückt wird, wenn das Aufhängungssystem (16) zusammengedrückt wird; wobei
das Aufhängungssystem (16) außerdem eine zweite Luftdruckreguliereinrichtung (32) aufweist, die Luft zur zweiten Gaskammer (72, 75) von der ersten Gaskammer (71, 76) zuführt; und
die zweite Luftdruckreguliereinrichtung (32) so ausgebildet ist, dass sie einen Luftdurchgang (21b) zwischen der ersten (71, 76) und der zweiten Gaskammer (72, 75) öffnet, wenn der Luftdruck in der zweiten Gaskammer (72, 75) kleiner wird als der Luftdruck in der ersten Gaskammer (71, 76).

## Revendications

1. Véhicule (1), comprenant:
une carrosserie de véhicule;
une roue de véhicule (15); et
un système de suspension (16), agencé entre la carrosserie du véhicule et la roue du véhicule (15), le système de suspension (16) comprenant une chambre à gaz remplie d'air (71, 72, 75, 76) et un premier moyen d'ajustement de la pression de l'air (46), structuré de sorte que l'air est aspiré dans la chambre à gaz (71, 72, 75, 76) à partir de l'extérieur du système de suspension (16) lorsque la pression de l'air dans la chambre à gaz (71, 72, 75, 76) tombe au-dessous d'une valeur prédéterminée; et
la chambre à gaz (71, 72, 75, 76) comprenant:
une première chambre à gaz (71, 76) remplie d'air, qui est comprimé lors de l'extension du système de suspension (16), et dilaté lorsque le système de suspension (16) est comprimé; et
une deuxième chambre à gaz (72, 75) remplie d'air, qui est dilaté lors de l'extension du système de suspension (16), et qui est comprimé lorsque le système de suspension (16) est comprimé, dans lequel:
le système de suspension (16) comprend en outre un deuxième moyen d'ajustement de la pression de l'air (32), amenant l'air vers la deuxième chambre à gaz (72, 75) à partir de la première chambre à gaz (71, 76); et
le deuxième moyen d'ajustement de la pression de l'air (32) est adapté pour ouvrir un passage d'air (21b) entre les première (71, 76) et deuxième (72, 75) chambres à gaz lorsque la pression de l'air dans la deuxième (72, 75) chambre à gaz est inférieure à la pression de l'air dans la première (71, 76) chambre à gaz.

2. Véhicule (1) selon la revendication 1, dans lequel le premier moyen d'ajustement de la pression de l'air (46) est structuré de sorte que l'air est aspiré dans la chambre à gaz (71, 72, 75, 76) à partir de l'extérieur du système de suspension (16) par suite de l'extension et de la compression du système de suspension (16).

3. Véhicule (1) selon la revendication 1 ou 2, dans lequel le premier moyen d'ajustement de la pression de l'air (46) englobe une première soupape de retenue (44).

4. Véhicule (1) selon l'une quelconque des revendications précédentes, dans lequel le système de suspension (16) englobe un élément de tube externe (22, 84), un élément d'arbre (20, 82), inséré de manière mobile à l'intérieur de l'élément de tube externe (22, 84), et un premier piston (21, 83) fixé sur l'élément d'arbre (20, 82).

5. Véhicule (1) selon la revendication 4, dans lequel la première chambre à gaz (71, 76) est agencée dans une région entourée au moins par une surface interne de l'élément de tube externe (22, 84) une surface externe de l'élément d'arbre (20, 81) et le premier piston (21, 83).

6. Véhicule (1) selon la revendication 4 ou 5, dans lequel la deuxième chambre à gaz (72, 75) est agencée dans une région entourée au moins par la surface interne de l'élément de tube externe (22, 84) et le premier piston (21, 83).

7. Véhicule (1) selon l'une quelconque des revendications 4 à 6, dans lequel l'élément d'arbre (82) comprend une chambre à huile (74) remplie d'huile.

8. Véhicule (1) selon la revendication 7, dans lequel le système de suspension (16) comprend en outre un deuxième piston (86) agencé dans la chambre à huile (74).

9. Véhicule (1) selon la revendication 8, dans lequel, lors de l'extension et de la compression du système de suspension (16), le deuxième piston (86) se déplace à l'intérieur de la chambre à huile (74) de l'élément d'arbre (82) et exerce une force d'amortissement sur le système de suspension (16).

10. Véhicule (1) selon l'une quelconque des revendications précédentes, dans lequel la première chambre à gaz (71, 76) est connectée à l'extérieur du système de suspension (16) par l'intermédiaire du premier moyen d'ajustement de la pression de l'air (46).

11. Véhicule (1) selon l'une quelconque des revendications précédentes, dans lequel l'air est aspiré dans la première chambre à gaz (71, 76) à partir de l'extérieur du système de suspension (16) lorsque la pression de l'air dans la première chambre à gaz (71, 76) devient inférieure à une valeur prédéterminée, par suite de la dilatation de l'air dans la première chambre à gaz (71, 76) lors de la compression du système de suspension (16).

12. Véhicule (1) selon l'une quelconque des revendications précédentes, dans lequel le deuxième moyen d'ajustement de la pression de l'air (32) du système de suspension (16) comprend une deuxième soupape de retenue (30).

13. Véhicule (1) selon l'une quelconque des revendications précédentes, dans lequel le système de suspension (16) comprend en outre un troisième moyen d'ajustement de la pression de l'air (49) déchargeant l'air de la première chambre à gaz (71, 76) vers l'extérieur du système de suspension (16).

14. Véhicule (1) selon la revendication 13, dans lequel, lorsque la pression de l'air dans la première chambre à gaz (71, 76) est supérieure à une valeur prédéterminée par suite de la compression de l'air dans la première chambre à gaz (71, 76) lors de l'extension du système de suspension (16), l'air est déchargé de la première chambre à gaz (71, 76) vers l'extérieur du système de suspension (16) par l'intermédiaire du troisième moyen d'ajustement de la pression de l'air (49).

15. Véhicule (1) selon la revendication 13 ou 14, dans lequel le troisième moyen d'ajustement de la pression de l'air (49) du système de suspension comprend une troisième soupape de retenue (47).

16. Véhicule selon la revendication 13, 14 ou 15, dans lequel le troisième moyen d'ajustement de la pression de l'air (49) comporte un élément d'ajustement (48) ajustant la valeur prédéterminée de la pression de l'air en présence de laquelle l'air dans la première chambre à gaz (71, 76) est déchargé de la première chambre à gaz (71, 76) vers l'extérieur du système de suspension (16) par l'intermédiaire du troisième moyen d'ajustement de la pression de l'air (49).

17. Véhicule (1) selon l'une quelconque des revendications précédentes, dans lequel le système de suspension (16) est une suspension arrière.

18. Système de suspension (16), adapté pour être agencé entre une carrosserie d'un véhicule et une roue d'un véhicule (15), le système de suspension (16) comprenant une chambre à gaz remplie d'air (71, 72, 75, 76) et un premier moyen d'ajustement de la pression de l'air (46), structuré de sorte que l'air est aspiré dans la chambre à gaz (71, 72, 75, 76) à partir de l'extérieur du système de suspension (16) lorsque la pression de l'air dans la chambre à gaz (71, 72, 75, 76) tombe au-dessous d'une valeur prédéterminée; et
la chambre à gaz (71, 72, 75, 76) comprenant:
une première chambre à gaz (71, 76) remplie d'air, qui est comprimé lors de l'extension du système de suspension (16) et dilaté lors de la compression du système de suspension (16); et
une deuxième chambre à gaz (72, 75), remplie d'air, qui est dilaté lors de l'extension du système de suspension (16) et comprimé lors de la compression du système de suspension (16); dans lequel
le système de suspension (16) comprend en outre un deuxième moyen d'ajustement de la pression de l'air (32), amenant l'air vers la deuxième chambre à gaz (72, 75) à partir de la première chambre à gaz (71, 76); et
le deuxième moyen d'ajustement de la pression de l'air (32) est adapté pour ouvrir un passage d'air (21b) entre les première (71, 76) et deuxième (72, 75) chambres à gaz lorsque la pression de l'air dans la deuxième (72, 75) chambre à gaz devient inférieure à la pression de l'air dans la première (71, 76) chambre à gaz.
